# EUROPEAN PATENT APPLICATION

(11) **EP 4 640 471 A1**
(43) Date of publication of application: **29.10.2025**
(21) Application number: 25167797.7
(22) Date of filing: 01.04.2025
(51) Int. Cl.: B60L 3/00, B60L 3/04, B60L 53/00, B60L 53/10, B60L 53/14, B60L 53/30, B60L 53/31, B60L 53/34, B60L 53/35, B60L 53/36, B60L 53/37, B60L 53/57, B60L 53/60, B60L 53/68, B60W 30/08

(54) **SYSTEM AND METHOD FOR MONITORING AN ELECTRIC VEHICLE CHARGING STATION FOR COLLISIONS**

(30) Priority: 26.04.2024 US 202418648103
(71) Applicant: Honeywell International Inc., Charlotte, NC 28202 (US)
(72) Inventor: KARNICK, Drew Alan, Charlotte 28202 (US); BURKHOLDER, Nancy, Charlotte 28202 (US); HANSON, Timothy J., Charlotte 28202 (US)
(74) Representative: Haseltine Lake Kempner LLP

(57) **Abstract**

A system comprises a monitoring unit coupled to an electric vehicle charging station, the monitoring unit comprising at least one processor; and inertial sensors in communication with the monitoring unit and mechanically attached to the charging station. The inertial sensors are operative to produce a data ready pulse signal representative of a time at which the inertial sensors are sampled. The monitoring unit includes program instructions that perform a method comprising: measuring and then subsequently subtracting inertial measurement values produced by the inertial sensors when the monitoring unit is powered up; determining whether a measured acceleration value produced by the inertial sensors exceeds a user selected threshold; changing the data ready pulse signal to a discrete voltage level when the measured acceleration value exceeds the user selected threshold; and powering down the charging station in response to the changing of the data ready pulse signal to the discrete voltage level.

## Description

### BACKGROUND

An electric vehicle charging station typically supplies electric energy to the batteries of various electric vehicles. For example, a user can connect their electric vehicle via a cable of a charging station, which supplies electrical current to a battery of the electric vehicle. The cables and control systems of such charging stations can be housed in kiosks or other units in various locations to allow a driver of an electric vehicle to park the electric vehicle close to the charging station and begin the charging process.

Whether from a distracted driver or other event, a charging station can sometimes experience collision or crash events. Such events can occur when an external object such as the electric vehicle comes into contact with the charging station, where the contact can cause damage to the charging station or the external object.

Thus, there is need to detect collision or crash events at charging stations in order to mitigate any negative consequences of such events.

### SUMMARY

A system comprises a monitoring unit configured to be coupled to an electric vehicle charging station, the monitoring unit comprising at least one processor; and one or more inertial sensors in operative communication with the monitoring unit and configured to be mechanically attached to the electric vehicle charging station. The one or more inertial sensors are operative to produce a data ready pulse signal representative of a time at which the one or more inertial sensors are sampled. The monitoring unit includes program instructions, executable by the at least one processor, to perform a method comprising: measuring and then subsequently subtracting inertial measurement values produced by the one or more inertial sensors when the monitoring unit is powered up; determining whether a measured acceleration value produced by the one or more inertial sensors exceeds a user selected threshold; changing the data ready pulse signal to a discrete voltage level when the measured acceleration value exceeds the user selected threshold; and powering down the electric vehicle charging station in response to the changing of the data ready pulse signal to the discrete voltage level.

### BRIEF DESCRIPTION OF THE DRAWINGS

Features of the present invention will become apparent to those skilled in the art from the following description with reference to the drawings. Understanding that the drawings depict only typical embodiments and are not therefore to be considered limiting in scope, the invention will be described with additional specificity and detail through the use of the accompanying drawings, in which:
Figure 1 is a block diagram of a system for monitoring an electric vehicle charging station, according to one embodiment.
Figure 2 is an example implementation of a collision detection algorithm, which performs a method for monitoring an electric vehicle charging station;
Figure 3 is a flow diagram of an operational method for monitoring an electric vehicle charging station, according to one example; and
Figures 4A-4C are example simulated data graphs of an operational method for monitoring an electric vehicle charging station.

### DETAILED DESCRIPTION

In the following detailed description, embodiments are described in sufficient detail to enable those skilled in the art to practice the invention. It is to be understood that other embodiments may be utilized without departing from the scope of the invention. The following detailed description is, therefore, not to be taken in a limiting sense.

A system and method for monitoring an electric vehicle charging station is described herein.

The present system utilizes an inertial senor device, such as an inertial measurement unit (IMU), which provides a discrete signal indicating that an acceleration level has been exceeded. The inertial sensor device can be configured to monitor an electric vehicle charging station to ensure that a vehicle has not collided with the charging station.

A "data ready" signal is commonly uses in various inertial measurement units (IMUs). The data ready signal indicates both that the sensor in the IMU has been sampled and that data is ready for transmission. The IMU data ready signal can be used in combination with a monitoring unit for an electric vehicle charging station.

The data ready signal used is a pulse signal, which is already available in an IMU because it is inherent to the sensor sampling method for the gyroscope and accelerometers in the IMUs. In addition to indicating the device is communicating, the data ready signal also provides a direction indication that the IMU is functioning.

In one embodiment, an IMU used in the present approach can be an HGuide i300 micro-electro-mechanical system (MEMS) IMU available from Honeywell. This IMU produces a data ready pulse at 1800 Hz. The data ready pulse reflects both a fixed offset from the sensor sample time as well as an indication that the sensor serial data is ready to transmit.

When the IMU powers up, the monitoring device assumes that it is static and subtracts off any initial values. For example, if a particular axis is aligned with gravity (i.e., measuring about 9.8 meters/ second / second), the monitoring device subtracts off that value. This feature allows the monitoring device to be installed in any orientation. After initialization, the monitoring device compares measured acceleration deviation from "zero" to a user-selected threshold. When the threshold is exceeded on any axis, the data ready signal is changed from a pulse to a discrete voltage level. The monitoring device monitors for the permanent value of the discrete voltage level, and then takes actions to shut down the charging station. In some embodiments, the data ready pulse signal can correspond to a digital health signal of the IMU, and the discrete voltage level can correspond to a logic high signal that is user selected.

The monitoring software takes into account the known width of the data pulse. The monitoring software can also apply simple filtering by waiting some amount of time after the initial change from a pulse to a discrete level. An up/down strike counter type strategy can be used to accommodate situations where the measurement acceleration is close to the acceleration threshold. A filtering strategy can also be used to match the response to measurement data associated with a vehicle colliding into the charging station.

Further details of various embodiments are described hereafter and with reference to the drawings.

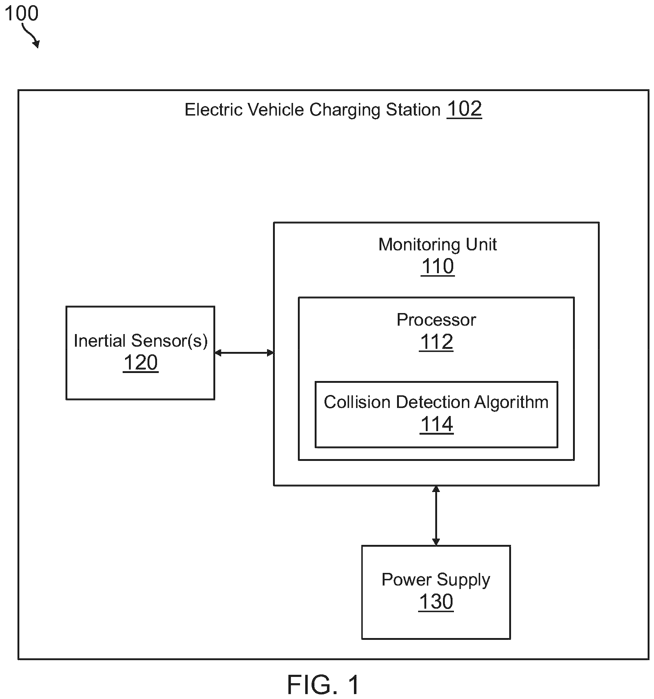

Figure 1 is a block diagram of a system 100 for monitoring an electric vehicle charging station 102, according to one embodiment. The system 100 comprises a monitoring unit 110 coupled to electric vehicle charging station 102, with monitoring unit 110 including at least one processor 112. A collision detection algorithm 114 is stored in a memory associated with processor 112. The collision detection algorithm 114 is embodied by program instructions, executable by processor 112, to perform a method of monitoring electric vehicle charging station 102 to detect a collision by a vehicle or other object, as described further hereafter.

One or more inertial sensors 120 are in operative communication with monitoring unit 110, and are mechanically attached to electric vehicle charging station 102 such that a motion of electric vehicle charging station 102 results in inertial sensor motion. The inertial sensors 120 can comprise one or more single or multi-axis inertial sensors. For example, inertial sensors 120 can comprise an IMU that includes one or more gyroscopes and one or more accelerometers. In addition, the multi-axis acceleration information produced by an IMU can be used to facilitate installation of monitoring unit 110 in any axis. The inertial sensors 120 are operative to produce inertial measurement values and a data ready pulse signal representative of a time at which inertial sensors 120 are sampled.

In addition, a power supply 130 is coupled to electric vehicle charging station 102, and is in operative communication with monitoring unit 110.

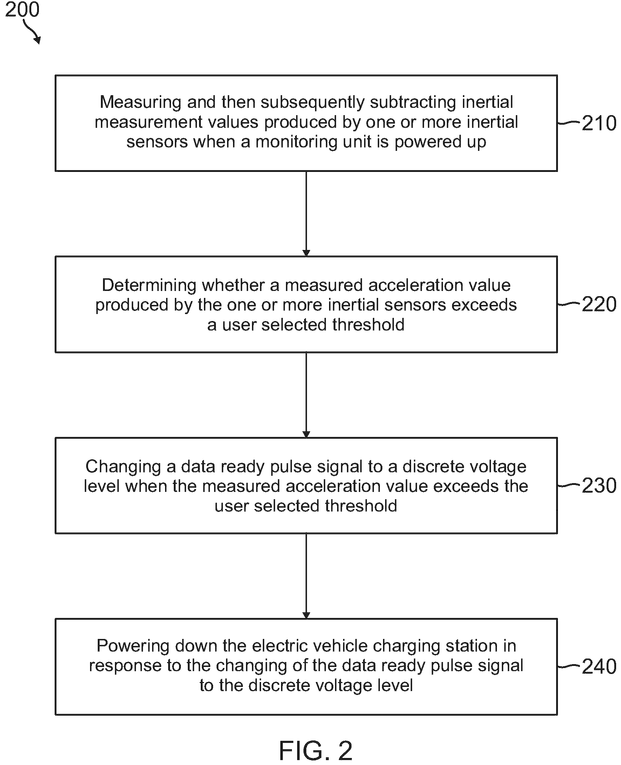

Figure 2 is an example implementation of a collision detection algorithm, such as collision detection algorithm 114, which performs a method 200 of monitoring an electric vehicle charging station (e.g., charging station 102). The method 200 comprises measuring and then subsequently subtracting inertial measurement values produced by one or more inertial sensors (e.g., inertial sensors 120), when a monitoring unit (e.g., monitoring unit 110) is powered up (block 210). While the monitoring unit is powered up, method 200 determines whether a measured acceleration value produced by the one or more inertial sensors exceeds a user selected threshold (block 220). The method 200 changes a data ready pulse signal (e.g., digital pulse from inertial sensors 120) to a discrete voltage level (e.g., logic high signal) when the measured acceleration value exceeds the user selected threshold (block 230). The method 200 powers down the electric vehicle charging station in response to the changing of the data ready pulse signal to the discrete voltage level (block 240).

In one implementation, powering down of the electric vehicle charging station can occur after a preselected waiting time period following changing of the data ready pulse signal to the discrete voltage level. The waiting time can be in a range reflecting the inherent data rate of the inertial sensors (e.g., about 552 micro-seconds for the i300 IMU) on the low end, to a longer range which may account for other system knowledge. For example, the measured acceleration value pattern over 250 milli-seconds (450 points) can be analyzed and evaluated to determine whether the pattern correlates to known measurement data associated with a vehicle colliding into the electric vehicle charging station.

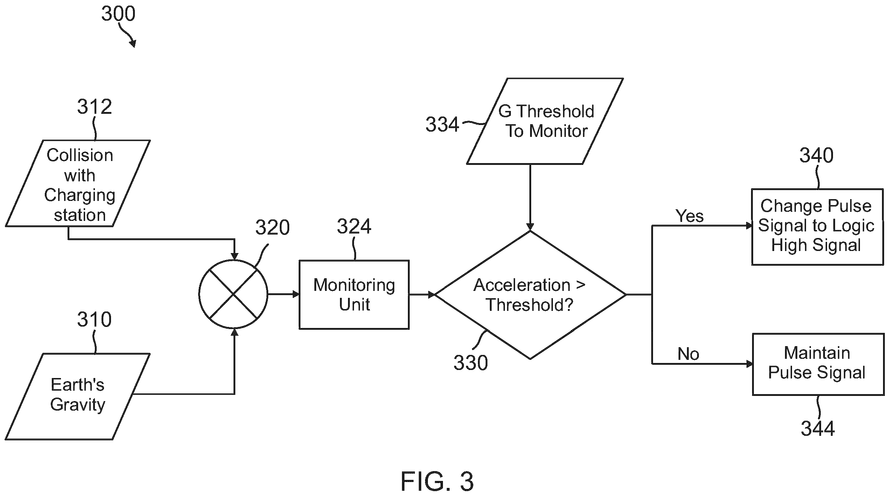

Figure 3 is a flow diagram illustrating an operational method 300 for monitoring an electric vehicle charging station, according to one example. Initially, method 300 includes receiving acceleration values from two sources, including Earth's gravity of about 9.8 m/s² (block 310), and an acceleration value from an IMU resulting from forces exerted on the charging station, such as a collision with the charging station (block 312). The acceleration values are combined in a summer 320 and sent to a monitoring unit 324 for processing. The combined acceleration values are compared to a pre-determined threshold (block 330), and a health signal of the IMU is modified based on that decision. For example, a G force threshold can be provided to monitor (block 334). If the combined acceleration values are determined to be greater than the threshold (at block 330), then a data ready pulse signal of the IMU is changed to a discrete voltage level (logic high signal) (block 340), and actions are taken to power down the charging station. If the combined acceleration values are determined to not be greater than the threshold (at block 330), then the data ready pulse signal is maintained (block 344), and the charging station is not powered down.

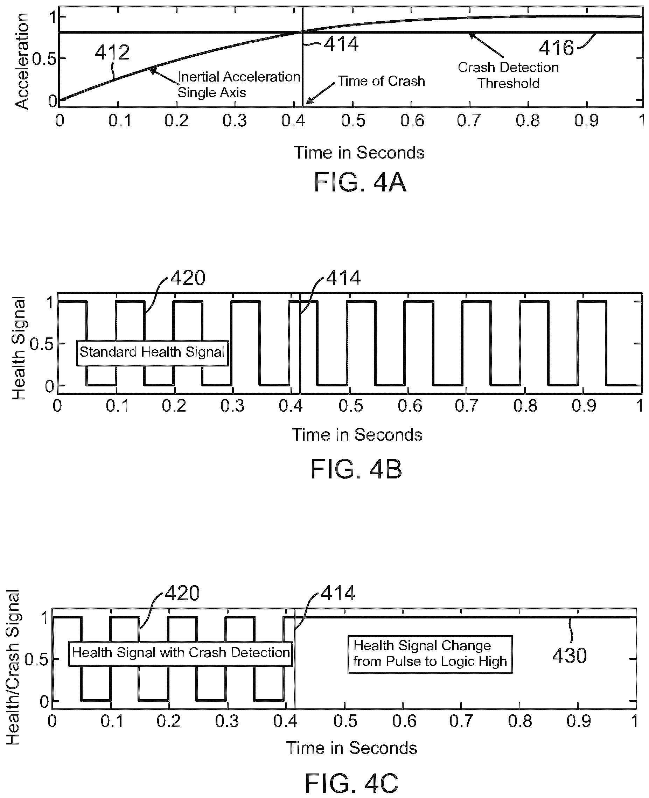

Figures 4A-4C are example simulated data graphs for an operational method for monitoring an electric vehicle charging station. Each of Figures 4A-4C are shown for the same time period.

In particular, Figure 4A shows simulated acceleration values with respect to a time period (from 0 to 1 second). A curve 412 represents inertial acceleration for a single axis. A vertical line 414 represents a time of crash into the charging station. A horizontal line 416 represents a crash detection threshold. Figure 4B shows a simulated standard health signal (data ready signal) of an IMU with respect to time. The health signal has a pulse train 420 indicative of device health, prior to any external forces being exerted on the charging station (e.g., from crash event). Figure 4C shows a simulated health/crash signal with respect to time. The health signal changes from pulse train 420 to a logic high signal 430 (discrete voltage) at the time of crash detection indicated by vertical line 414.

For example, if at the time of crash (line 414) the acceleration value is greater than the crash detection threshold (line 416, Fig. 4A), then the health signal changes from pulse train 420 to logic high signal 430 as shown in Figure 4C, and actions are taken to power down the charging station. In contrast, if the acceleration value is not greater than the crash detection threshold, then the health signal is maintained as pulse train 420 as shown in Figure 4B, and the charging station is not powered down.

The processing units and/or other computational devices used in the system and method described herein may be implemented using software, firmware, hardware, or appropriate combinations thereof. The processing units and/or other computational devices may be supplemented by, or incorporated in, specially-designed application-specific integrated circuits (ASICs) or field programmable gate arrays (FPGAs). The processing units and/or other computational devices can also include or function with software programs, firmware, or other computer readable instructions for carrying out various process tasks, calculations, and control functions used in the methods and systems described herein.

The methods described herein may be implemented by computer executable instructions, such as program modules or components, which are executed by at least one processor or processing unit. Generally, program modules include routines, programs, objects, data components, data structures, algorithms, and the like, which perform particular tasks or implement particular abstract data types.

Instructions for carrying out the various process tasks, calculations, and generation of other data used in the operation of the methods described herein can be implemented in software, firmware, or other computer readable instructions. These instructions are typically stored on appropriate computer program products that include computer readable media used for storage of computer readable instructions or data structures. Such a computer readable medium may be available media that can be accessed by a general purpose or special purpose computer or processor, or any programmable logic device.

Suitable computer readable storage media may include, for example, nonvolatile memory devices including semi-conductor memory devices such as Random Access Memory (RAM), Read Only Memory (ROM), Electrically Erasable Programmable ROM (EEPROM), or flash memory devices; magnetic disks such as internal hard disks or removable disks; optical storage devices such as compact discs (CDs), digital versatile discs (DVDs), Blu-ray discs; or any other media that can be used to carry or store desired program code in the form of computer executable instructions or data structures.

### Example Embodiments

Example 1 includes a system comprising: a monitoring unit configured to be coupled to an electric vehicle charging station, the monitoring unit comprising at least one processor; and one or more inertial sensors in operative communication with the monitoring unit and configured to be mechanically attached to the electric vehicle charging station, the one or more inertial sensors operative to produce a data ready pulse signal representative of a time at which the one or more inertial sensors are sampled; wherein the monitoring unit includes program instructions, executable by the at least one processor, to perform a method comprising: measuring and then subsequently subtracting inertial measurement values produced by the one or more inertial sensors when the monitoring unit is powered up; determining whether a measured acceleration value produced by the one or more inertial sensors exceeds a user selected threshold; changing the data ready pulse signal to a discrete voltage level when the measured acceleration value exceeds the user selected threshold; and powering down the electric vehicle charging station in response to the changing of the data ready pulse signal to the discrete voltage level.

Example 2 includes the system of Example 1, wherein the one or more inertial sensors comprise one or more single or multi-axis inertial sensors.

Example 3 includes the system of any of Examples 1-2, wherein the one or more inertial sensors comprise an inertial measurement unit (IMU) that includes one or more gyroscopes and one or more accelerometers.

Example 4 includes the system of Example 3, wherein the data ready pulse signal corresponds to a digital health signal of the IMU.

Example 5 includes the system of Example 4, wherein the discrete voltage level corresponds to a logic high signal.

Example 6 includes the system of any of Examples 1-5, wherein powering down the electric vehicle charging station occurs after a preselected waiting time period after changing the data ready pulse signal to the discrete voltage level.

Example 7 includes the system of any of Examples 1-6, wherein the measured acceleration value is evaluated to determine whether it matches with measurement data associated with a vehicle colliding into the electric vehicle charging station.

Example 8 includes the system of any of Examples 1-7, wherein multi-axis acceleration information is usable to facilitate installation of the monitoring unit in any axis.

Example 9 includes a method comprising: providing a monitoring unit coupled to an electric vehicle charging station; providing one or more inertial sensors in operative communication with the monitoring unit and mechanically attached to the electric vehicle charging station, the one or more inertial sensors operative to produce a data ready pulse signal representative of a time at which the one or more inertial sensors are sampled; measuring and then subsequently subtracting inertial measurement values produced by the one or more inertial sensors when the monitoring unit is powered up; determining whether a measured acceleration value produced by the one or more inertial sensors exceeds a user selected threshold; changing the data ready pulse signal to a discrete voltage level when the measured acceleration value exceeds the user selected threshold; and powering down the electric vehicle charging station in response to the changing of the data ready pulse signal to the discrete voltage level.

Example 10 includes the method of Example 9, wherein the one or more inertial sensors comprise one or more single or multi-axis inertial sensors.

Example 11 includes the method of Example 10, wherein the one or more inertial sensors comprise an inertial measurement unit (IMU) that includes one or more gyroscopes and one or more accelerometers.

Example 12 includes the method of Example 11, wherein the data ready pulse signal corresponds to a digital health signal of the IMU.

Example 13 includes the method of Example 12, wherein the discrete voltage level corresponds to a logic high signal.

Example 14 includes the method of any of Examples 9-13, wherein powering down the electric vehicle charging station occurs after a preselected waiting time period after changing the data ready pulse signal to the discrete voltage level.

Example 15 includes the method of any of Examples 9-14, wherein the measured acceleration value is evaluated to determine whether it matches with measurement data associated with a vehicle colliding into the electric vehicle charging station.

Example 16 includes the method of any of Examples 9-15, wherein multi-axis acceleration information is usable to facilitate installation of the monitoring unit in any axis.

The present invention may be embodied in other specific forms without departing from its essential characteristics. The described embodiments are to be considered in all respects only as illustrative and not restrictive. The scope of the invention is therefore indicated by the appended claims rather than by the foregoing description. All changes that come within the meaning and range of equivalency of the claims are to be embraced within their scope.

## Claims

1. A system comprising:
a monitoring unit configured to be coupled to an electric vehicle charging station, the monitoring unit comprising at least one processor; and
one or more inertial sensors in operative communication with the monitoring unit and configured to be mechanically attached to the electric vehicle charging station, the one or more inertial sensors operative to produce a data ready pulse signal representative of a time at which the one or more inertial sensors are sampled;
wherein the monitoring unit includes program instructions, executable by the at least one processor, to perform a method comprising:
measuring and then subsequently subtracting inertial measurement values produced by the one or more inertial sensors when the monitoring unit is powered up;
determining whether a measured acceleration value produced by the one or more inertial sensors exceeds a user selected threshold;
changing the data ready pulse signal to a discrete voltage level when the measured acceleration value exceeds the user selected threshold; and
powering down the electric vehicle charging station in response to the changing of the data ready pulse signal to the discrete voltage level.

2. The system of claim 1, wherein the one or more inertial sensors comprise one or more single or multi-axis inertial sensors.

3. The system of claim 1, wherein the one or more inertial sensors comprise an inertial measurement unit (IMU) that includes one or more gyroscopes and one or more accelerometers.

4. The system of claim 3, wherein the data ready pulse signal corresponds to a digital health signal of the IMU.

5. The system of claim 4, wherein the discrete voltage level corresponds to a logic high signal.

6. The system of claim 1, wherein powering down the electric vehicle charging station occurs after a preselected waiting time period after changing the data ready pulse signal to the discrete voltage level.

7. The system of claim 1, wherein the measured acceleration value is evaluated to determine whether it matches with measurement data associated with a vehicle colliding into the electric vehicle charging station.

8. The system of claim 1, wherein multi-axis acceleration information is usable to facilitate installation of the monitoring unit in any axis.

9. A method comprising:
providing a monitoring unit coupled to an electric vehicle charging station;
providing one or more inertial sensors in operative communication with the monitoring unit and mechanically attached to the electric vehicle charging station, the one or more inertial sensors operative to produce a data ready pulse signal representative of a time at which the one or more inertial sensors are sampled;
measuring and then subsequently subtracting inertial measurement values produced by the one or more inertial sensors when the monitoring unit is powered up;
determining whether a measured acceleration value produced by the one or more inertial sensors exceeds a user selected threshold;
changing the data ready pulse signal to a discrete voltage level when the measured acceleration value exceeds the user selected threshold; and
powering down the electric vehicle charging station in response to the changing of the data ready pulse signal to the discrete voltage level.

10. The method of claim 9, wherein powering down the electric vehicle charging station occurs after a preselected waiting time period after changing the data ready pulse signal to the discrete voltage level.
